# EUROPEAN PATENT APPLICATION

(11) **EP 4 144 239 A1**
(43) Date of publication of application: **08.03.2023**
(21) Application number: 20933903.5
(22) Date of filing: 28.04.2020
(51) Int. Cl.: A24F 40/40, A24F 47/00

(54) **SUCTION DEVICE**

(71) Applicant: Japan Tobacco Inc., Tokyo 105-6927 (JP)
(72) Inventor: YAMADA, Kentaro, Tokyo 130-8603 (JP); SUMII, Tateki, Tokyo 130-8603 (JP)
(74) Representative: Hoffmann Eitle
(86) International application number: PCT/JP2020/018153
(87) International publication number: WO 2021/220413

(57) **Abstract**

To provide a technology capable of improving safety of a suction device.

A suction device 10 includes an enclosure 30 and a battery 70 that is housed inside the enclosure and supplies power used when an aerosol-generating base 100 generates an aerosol, in which at a first-side end of the enclosure in an axial direction of the suction device, a receiving hole 41 through which the aerosol-generating base is received is provided or a mouthpiece is connected, and at a second-side end of the enclosure opposite to the first side in the axial direction, an enclosure hole 32 communicating inside of the enclosure with outside is provided.

## Description

### TECHNICAL FIELD

The present invention relates to a suction device, and more specifically to a suction device for sucking aerosols.

### BACKGROUND ART

Conventionally, suction devices for aerosol suction have been known (see, for example, PTL 1). Such a suction device includes an enclosure. At the end of the enclosure on one side (first side) in an axial direction of a suction device, a receiving hole for receiving an aerosol-generating base (referred to as a smokable material in PTL 1) is provided. Further, inside the enclosure, a battery is housed. A user, when using the suction device, sucks an aerosol generated by the aerosol-generating base.

### CITATION LIST

### PATENT LITERATURE

PTL 1: JP 2019-518421 A

### SUMMARY OF INVENTION

### TECHNICAL PROBLEM

Incidentally, there may be a case where the pressure of the gas in the enclosure increases when, for example, the battery of the suction device has some kind of failure. With the conventional technology according to PTL 1 described above, it is difficult to quickly reduce the pressure of the gas inside the enclosure when such a situation occurs. Therefore, the conventional technology has room for improvement in terms of safety of the suction device.

The present invention has been made in view of the above, and one of objects is to provide a technology capable of improving the safety of the suction device.

### SOLUTION TO PROBLEM

### (First Aspect)

In order to achieve the above object, a suction device according to an aspect of the present invention is a suction device for sucking an aerosol including: an enclosure; and a battery configured to be housed inside the enclosure and supply power used when an aerosol-generating base generates the aerosol, in which at a first-side end of the enclosure in an axial direction of the suction device, a receiving hole through which the aerosol-generating base is received is provided or a mouthpiece is connected, and at a second-side end of the enclosure opposite to the first side in the axial direction, an enclosure hole communicating inside of the enclosure with outside is provided.

According to the aspect, for example, when the pressure of gas inside the enclosure increases when the battery has some kind of failure, the gas inside the enclosure can pass through the enclosure hole and be released to the outside of the enclosure. Thus, the pressure of the gas inside the enclosure can be quickly reduced. Thus, the safety of the suction device can be improved. Further, since the enclosure hole is provided at the second-side end, the gas passing through the enclosure hole can be prevented from being blown out toward the user's face. In this respect as well, the safety of the suction device can be improved.

### (Second Aspect)

According to the first aspect, the suction device further includes: a battery partition configured to be disposed inside the enclosure, in which the battery is housed in an inner area of the battery partition inside the enclosure, the battery partition includes at least a specific partition that is a partition disposed on the second side with respect to the battery, and a partition hole communicating inside of the battery partition with outside may be provided in the specific partition.

According to the aspect, the gas inside the battery partition can pass through the partition hole of the specific partition and be released to the outside of the battery partition. Thus, the pressure of the gas inside the battery partition can be quickly reduced. Further, since the partition hole is provided in the specific partition (i.e., the partition disposed on the second side with respect to the battery), the gas passing through the partition hole can be prevented from being blown out toward the user's face.

### (Third Aspect)

In the second aspect, the suction device further includes an outer chassis disposed outside the enclosure to cover the enclosure, in which the outer chassis may include an opening at the first-side end in the axial direction.

### (Fourth Aspect)

In the third aspect, the outer chassis may have a bottomed cylindrical shape with the second-side end closed.

### (Fifth Aspect)

In the fourth aspect, the outer chassis may be configured to, when the gas inside the battery partition passes through the partition hole and the enclosure hole and applies pressure to the outer chassis, move relative to the enclosure under the pressure.

According to the aspect, when the pressure by the gas passing through the partition hole and the enclosure hole is applied to the outer chassis, the outer chassis can move relative to the enclosure to enlarge a gap between the enclosure and the outer chassis.

### (Sixth Aspect)

In the fifth aspect, the outer chassis, when moving relative to the enclosure under the pressure, may move to the second side in the axial direction relative to the enclosure.

### (Seventh Aspect)

In the sixth aspect, a bottom wall of the outer chassis on the second side in the axial direction includes a chassis hole that communicates inside of the outer chassis with outside, in a state before the outer chassis moves relative to the enclosure under the pressure, a closure member is inserted into the chassis hole, and the chassis hole is closed by the inserted closure member, and when the outer chassis moves relative to the enclosure under the pressure, the chassis hole may be in a state of being not closed by the closure member.

According to the aspect, in the state before the outer chassis moves relative to the enclosure under the pressure by the gas, it is possible to prevent a foreign object outside the outer chassis from passing through the chassis hole and entering the outer chassis. On the other hand, when the outer chassis moves relative to the enclosure under the pressure by the gas, the gas can be easily discharged to the outside of the outer chassis through the chassis hole. Thus, the pressure inside the outer chassis can be quickly reduced. Further, the gas passing through the chassis hole can also be prevented from blowing out toward the user's face. Further, the outer chassis can be prevented from moving relative to the enclosure more than necessary.

### (Eighth Aspect)

In the seventh aspect, the closure member may include an electrical connector.

### ADVANTAGEOUS EFFECTS OF INVENTION

According to the aspects of the present invention, the safety of a suction device can be improved.

### BRIEF DESCRIPTION OF DRAWINGS

Fig. 1A is a front view schematically illustrating an external configuration of a suction device according to an embodiment.
Fig. 1B is a bottom view schematically illustrating a -Z direction-side end face of an outer chassis according to the embodiment.
Fig. 2 is a front view schematically illustrating a state in which an enclosure and the outer chassis according to the embodiment are separated.
Fig. 3A is a schematic cross-sectional view for describing an internal configuration of the enclosure according to the embodiment.
Fig. 3B is a bottom view schematically illustrating an -Z direction-side end face of the enclosure according to the embodiment.
Fig. 4 is a schematic perspective view of a battery partition according to the embodiment.
Fig. 5A is a schematic view schematically illustrating a state of an area near a partition hole when the pressure of gas inside the enclosure increases.
Fig. 5B is a schematic view schematically illustrating a state in which the outer chassis has moved to a second side from the state illustrated in Fig. 5A.

### DESCRIPTION OF EMBODIMENTS

Hereinafter, a suction device 10 according to the embodiment of the present invention will be described with reference to the drawings. Note that the drawings of the present application are schematically illustrated to facilitate understanding of the features of the embodiment, and the dimensional proportions or the like of each component may not be the same as the actual ones. Further, the drawings of the present application illustrate X-Y-Z Cartesian coordinates as necessary.

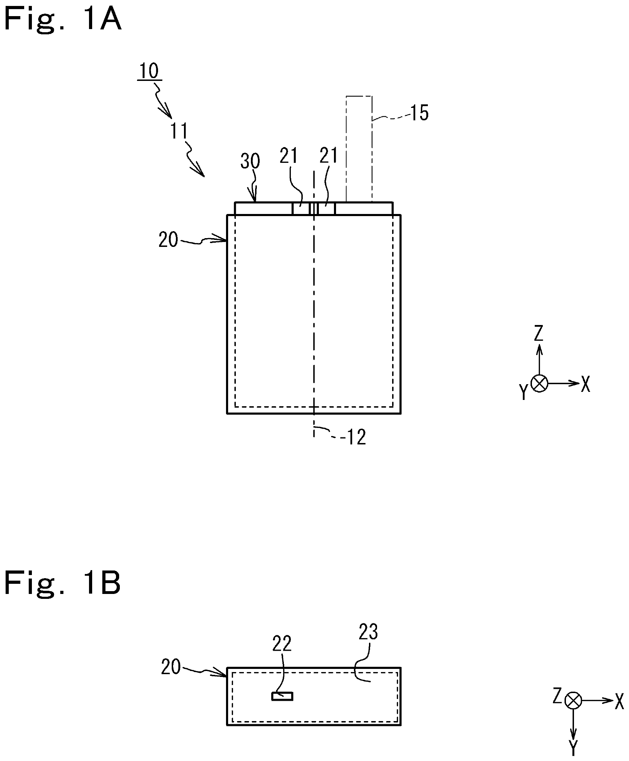

Fig. 1A is a front view schematically illustrating an external configuration of the suction device 10 according to the present embodiment. Specifically, Fig. 1A schematically illustrates an external configuration of a device body 11 of the suction device 10. An axis 12 illustrated in Fig. 1A is an axis of the suction device 10. In an X-Y-Z Cartesian coordinate, a direction along the Z axis (Z direction or -Z direction) corresponds to a direction along the axis 12 (that is, axial direction). Further, a Z-direction side corresponds to a "first side in the axial direction" and a -Z-direction side corresponds to a "second side in the axial direction (opposite to the first side)." Note that the suction device 10 illustrated in Fig. 1A is drawn to have a symmetrical shape across the axis 12, but is not limited to this configuration. The suction device 10 can have an asymmetrical shape across the axis 12.

The suction device 10 according to the present embodiment is a suction device for sucking aerosols (i.e., a suction device for aerosol suction). Specifically, the suction device 10 according to the present embodiment is a suction device used as a heat-not-burn tobacco. In addition to the device body 11 illustrated in the drawings, this suction device 10 also includes a cap that is attached to a Z direction-side end of the device body 11, and in the present application, illustration of the cap is omitted.

The device body 11 of the suction device 10 includes an outer chassis 20 and an enclosure 30. In the suction device 10 according to the present embodiment, when the suction device 10 is in use, a mouthpiece 15 is connected to a first-side (Z-direction side) end of the enclosure 30. A user puts the mouthpiece 15 near a Z direction-side end into the mouth and sucks the aerosol. Note that the mouthpiece 15 is not an essential configuration, but the suction device 10 may be configured not to include the mouthpiece 15.

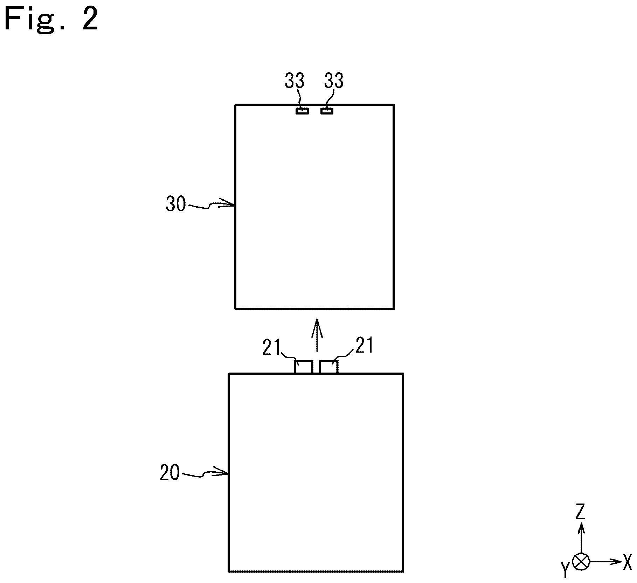

Fig. 1B is a bottom view schematically illustrating the -Z direction-side end face of the outer chassis 20. Fig. 2 is a front view schematically illustrating a state in which the enclosure 30 and the outer chassis 20 are separated. Referring to Figs. 1 and 2, the outer chassis 20 is disposed outside of the enclosure 30 to cover the enclosure 30 when the suction device 10 is in use (when aerosol is sucked). Specifically, the outer chassis 20 according to the present embodiment is disposed outside of the enclosure 30 to cover the outer circumferential surface of the enclosure 30 from the outside.

The specific shape of the outer chassis 20 is not particularly limited, but the outer chassis 20 according to the present embodiment has, as an example, an opening at a first-side (Z direction-side) end in the axial direction of the suction device 10. Moreover, the outer chassis 20 according to the present embodiment has a "bottomed cylindrical shape" with the second-side (-Z direction-side) end being closed. Note that the outer chassis 20 may have a shape in which a second-side end is also opened.

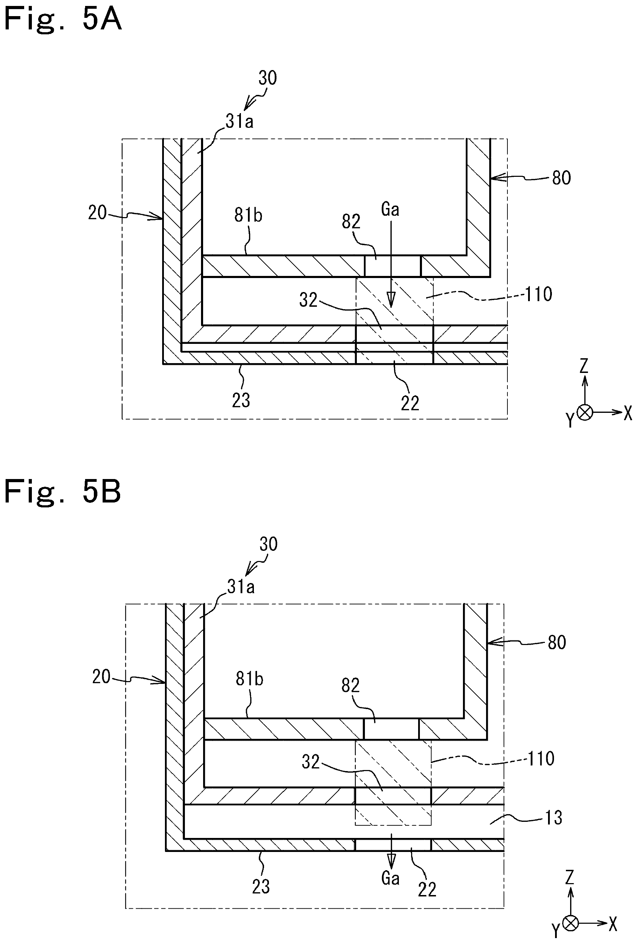

Further, as illustrated in Fig. 1B, a bottom wall 23 at the second-side end of the outer chassis 20 has a chassis hole 22 that communicates the inside of the outer chassis 20 with the outside. Further, in the present embodiment, the chassis hole 22 is provided in the bottom wall 23 to face an enclosure hole 32 of the enclosure 30, which will be described below (see Fig. 5 below).

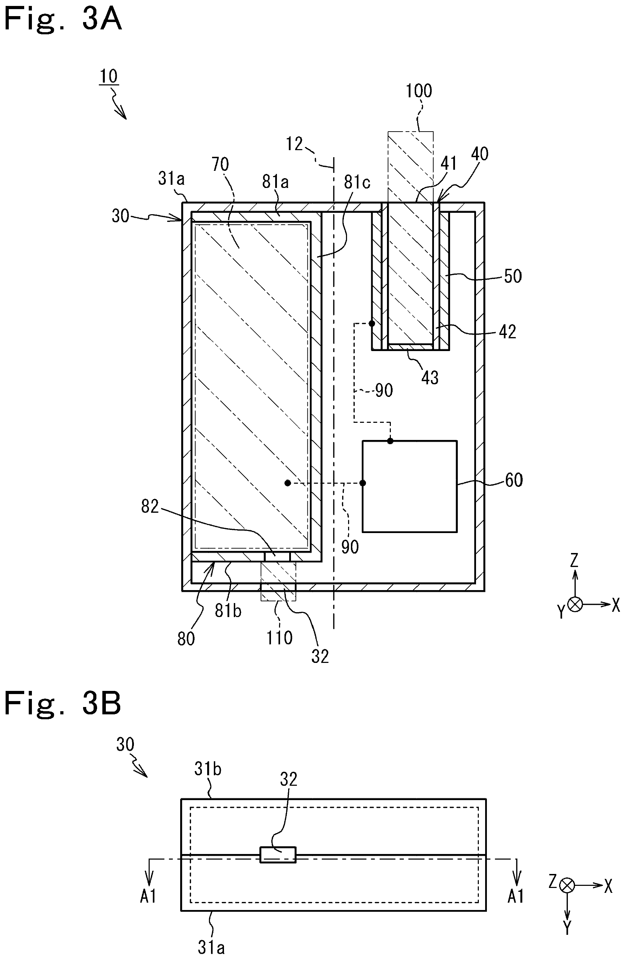

In the chassis hole 22, an electrical connector 110 (illustrated in Fig. 3A below) is inserted when the suction device 10 is in use. The specific type of the electrical connector 110 is not particularly limited, but in the present embodiment, a universal serial bus (USB) connector is used as an example of the electrical connector 110. The specific use of the USB connector is not particularly limited, but the USB connector according to the present embodiment is mainly used to bring in power from the outside when charging a battery 70. This USB connector is electrically connected directly or indirectly to a control device 60 and the battery 70.

Note that the electrical connector 110 according to the present embodiment is an example of a "closure member" that is inserted into the chassis hole 22 and closes the chassis hole 22. However, the closure member is not limited to the electrical connector 110 as long as it can close the chassis hole 22.

As illustrated in Fig. 2, a first-side (Z direction-side) end of the outer chassis 20 is provided with engagement portions 21. Further, the outer circumferential surface of the enclosure 30 is provided with engagement target portions 33 with which the engagement portions 21 engage. When the outer chassis 20 is attached to the enclosure 30, the engagement portions 21 engage with the engagement target portions 33. Thus, the outer chassis 20 will not easily move with respect to the enclosure 30. Note that, in the present embodiment, as an example of the engagement portion 21, a nail is used, and as an example of the engagement target portion 33, a recess (a recess into which the nail fits) is used. Specifically, the nail, which is the engagement portion 21, is provided with a protrusion protruding toward the enclosure 30, and when the protrusion of the nail is fitted into the recess, which is the engagement portion 21, the engagement portion 21 engages with the engagement target portion 33.

Fig. 3A is a schematic cross-sectional view for describing an internal configuration of the enclosure 30. Specifically, Fig. 3A schematically illustrates a cross-sectional view of line A1-A1 in Fig. 3B, which is described below. Fig. 3B is a bottom view schematically illustrating the -Z direction-side end face of the enclosure 30. Referring to Figs. 3A and 3B, the enclosure 30 according to the present embodiment is, as an example, divided into two parts. Specifically, the enclosure 30 according to the present embodiment includes a first enclosure portion 31a and a second enclosure portion 31b. The first enclosure portion 31a and the second enclosure portion 31b each have a box shape, and an outer peripheral wall of the first enclosure portion 31a fits to an outer wall of the second enclosure portion 31b to constitute the enclosure 30. Further, inside the enclosure 30, a space (inner space) is provided.

As illustrated in Fig. 3B, a second-side (-Z direction-side) end (wall) of the enclosure 30 has the enclosure hole 32 communicating the inside of the enclosure 30 with the outside. In other words, the enclosure hole 32 is provided in a portion (second-side end) facing a second partition 81b (specific partition) of a battery partition 80, which will be described below.

As illustrated in Fig. 3A, in the enclosure hole 32, the electrical connector 110 (an example of the closure member) described above is inserted. Note that, in the present embodiment, the enclosure hole 32 is configured not to be in a state of being closed by the electrical connector 110 (fully closed state) even when the electrical connector 110 is inserted into the enclosure hole 32. Thus, even in a state where the electrical connector 110 is inserted into the enclosure hole 32, gas (Ga) to be described below can pass through the enclosure hole 32 (a gap between the electrical connector 110 and the enclosure hole 32).

As illustrated in Fig. 3A, in the enclosure 30, at least a receiving portion 40, a heating device 50, the control device 60, and the battery 70 are disposed. Further, in the enclosure 30 according to the present embodiment, the battery partition 80 is also disposed.

The receiving portion 40 is a portion for receiving the aerosol-generating base 100. As long as the receiving portion 40 has such a function, the specific configuration is not particularly limited, and the receiving portion 40 according to the present embodiment includes, as an example, a cylindrical tube 42 and a stopper member 43.

The cylindrical tube 42 includes a cylindrical member having openings on the first side (Z directional side) and the second side (-Z directional side). The material of the cylindrical tube 42 is not particularly limited, but in the present embodiment, metal is used, and specifically stainless steel (SUS) is used. That is, the cylindrical tube 42 according to the present embodiment includes a SUS tube having a cylindrical shape. The stopper member 43 is disposed at a second-side end of the cylindrical tube 42. The stopper member 43 is provided, mainly, to prevent the aerosol-generating base 100 from moving to the second side with respect to the stopper member 43. Further, the stopper member 43 according to the present embodiment is provided with a vent (ventilation opening).

A first-side opening of the receiving portion 40 functions as a "receiving hole 41" for receiving the aerosol-generating base 100. That is, the receiving hole 41 according to the present embodiment is provided at the first-side end of the enclosure 30. Further, the receiving portion 40 according to the present embodiment is disposed on an X direction side with respect to the battery partition 80 to be described below.

The aerosol-generating base 100 is a member that generates an aerosol when heated. As long as the aerosol-generating base 100 has such a function, the specific configuration is not particularly limited, and a known aerosol-generating base used in a known suction device can be applied. The aerosol-generating base 100 according to the present embodiment includes, as an example a cartridge. The cartridge houses therein a liquid containing an aerosol component.

The user, when using the suction device 10, sucks the aerosol generated by the aerosol-generating base 100. Note that, when the suction device 10 is in use, the first side (the Z-direction side) is the side approaching the user's face, and the second side (the -Z-direction side) is the side moving away from the user's face.

The heating device 50 is a device for heating the aerosol-generating base 100. The heating device 50 according to the present embodiment heats the aerosol-generating base 100 by generating heat using power supplied from the battery 70. As such heating device 50, a known heating device used in a known suction device, such as an electrical resistor (i.e., an electric heater), a ceramic heater, or the like can be applied.

Specifically, the heating device 50 according to the present embodiment is disposed outside the outer peripheral wall surface of the cylindrical tube 42 of the receiving portion 40. More specifically, the heating device 50 according to the present embodiment includes a film heater (film-shaped electrical resistor). Then, the film heater is disposed to cover the outer peripheral wall surface of the cylindrical tubes 42 (that is, the film heater according to the present embodiment is a film heater having a cylindrical shape). When the film heater, which is the heating device 50, generates heat, the heat from the film heater is conducted to the aerosol-generating base 100 via the cylindrical tube 42, and the aerosol-generating base 100 is heated to generate an aerosol. That is, the heating device 50 can also be a member that functions as an aerosol-generating portion that causes the aerosol-generating base 100 to generate an aerosol.

The control device 60 is a control device that integrally controls the operation of the suction device 10. Specifically, the control device 60 according to the present embodiment controls the operation of the heating device 50 and the operation (e.g., charging operation) of the battery 70. Note that the battery 70, the control device 60, and the heating device 50 are electrically connected by wiring 90. Such control device 60 includes a microcomputer. The microcomputer includes a central processing unit (CPU) as a processor, and read only memory (ROM), random access memory (RAM), or the like as a storage device.

Note that the suction device 10 may include a plurality of control devices. Then, the plurality of control devices may dispersively control control target portions such as the heating device 50, the battery 70, and the like.

The battery 70 is a member that functions as a power supply (i.e., a power supply at the time of aerosol generation) that supplies the power used when the aerosol-generating base 100 generates the aerosol. The battery 70 according to the present embodiment is electrically connected to the heating device 50 that heats the aerosol-generating base 100, as an example, and supplies the power to the heating device 50. The specific type of the battery 70 is not particularly limited, and a known battery used in a known suction device can be used. In the present embodiment, as an example of the battery 70, a rechargeable secondary battery is used, and as an example of this secondary battery, a lithium-ion battery is used.

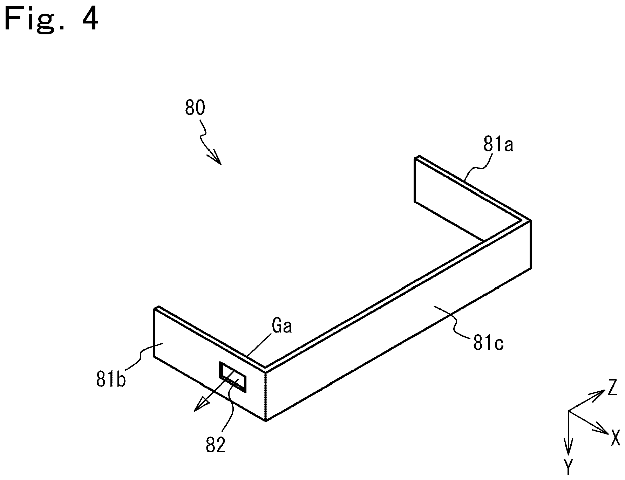

Fig. 4 is a schematic perspective view of the battery partition 80. Referring to Fig. 3A and Fig. 4, the battery partition 80 houses the battery 70 in its inner area. The battery partition 80 according to the present embodiment is, as an example, fixed to the inner peripheral wall of the first enclosure portion 31a. Further, the battery partition 80 according to the present embodiment is disposed on a -X-direction side with respect to the receiving portion 40 and the control device 60.

The battery partition 80 according to the present embodiment includes a first partition 81a, the second partition 81b, and a third partition 81c. The first partition 81a is disposed on the first side (Z-direction side) in the axial direction with respect to the battery 70. The second partition 81b is disposed on the second side (-Z-direction side) in the axial direction with respect to the battery 70. The third partition 81c extends in the axial direction (Z-axis direction) while connecting the X direction-side end of the first partition 81a and the X direction-side end of the second partition 81b.

Note that the second partition 81b according to the present embodiment is an example of the "specific partition."

The second partition 81b (i.e., the specific partition) includes a partition hole 82 that communicates the inside of the battery partition 80 with the outside. As illustrated in Fig. 3(a), the partition hole 82 according to the present embodiment is provided in the second partition 81b to face the enclosure hole 32 of the enclosure 30. On the other hand, in the present embodiment, the partition hole 82 is not provided in the first partition 81a or the third partition 81c. The partition hole 82 is a hole through which gas (Ga) inside the battery partition 80 passes when the pressure of the gas (Ga) inside increases.

Fig. 5A and Fig. 5B are schematic views for describing the operation when the pressure of the gas (Ga) inside the enclosure 30 increases. Specifically, Fig. 5A schematically illustrates a state of an area near the partition hole 82 when the pressure of the gas (Ga) inside the enclosure increases, and Fig. 5B schematically illustrates a state in which the outer chassis 20 has moved to the second side from the state illustrated in Fig. 5A.

Referring to Fig. 5A, there may be a case where the pressure of the gas (Ga) in the enclosure 30 increases when, for example, the battery 70 has some kind of failure. According to the present embodiment, as described with reference to Fig. 3 or the like, since the enclosure hole 32 is provided in the enclosure 30, the gas (Ga) inside the enclosure 30 can pass through the enclosure hole 32 and be released to the outside of the enclosure 30. Thus, the pressure inside the enclosure 30 can be reduced quickly. As a result, the safety of the suction device 10 can be improved. Further, since the enclosure hole 32 is provided at the second-side end, the gas (Ga) passing through the enclosure hole 32 can be prevented from being blown out toward the user's face. In this respect as well, the safety of the suction device 10 can be improved.

Further, according to the present embodiment, since the partition hole 82 is provided in the second partition 81b (specific partition) of the battery partition 80, when the pressure of the gas (Ga) inside the battery partition 80 increases when the battery 70 has some kind of failure, the gas (Ga) inside the battery partition 80 can pass through the partition hole 82 and be released to the outside of the battery partition 80. Thus, the pressure of the gas (Ga) inside the battery partition 80 can be quickly reduced. Further, since the partition hole 82 is provided in the second partition 81b (specific partition), the gas (Ga) passing through the partition hole 82 can be prevented from being blown out toward the user's face.

Here, the outer chassis 20 according to the present embodiment is configured to, when, as illustrated in Fig. 5B, the pressure of the gas (Ga) inside the battery partition 80 becomes a predetermined value or more, and the gas (Ga) inside the battery partition 80 passes through the partition hole 82 and the enclosure 30 and applies pressure to the outer chassis 20, move relative to the enclosure 30 under the pressure. Specifically, the outer chassis 20 according to the present embodiment, when moving relative to the enclosure 30 under the pressure by this gas (Ga), moves to the second side (-Z direction-side) in the axial direction relative to the enclosure 30.

Specifically, as described with reference to Figs. 1 and 2, the outer chassis 20 according to the present embodiment has a bottomed cylindrical shape with the first-side end opened and the second-side end closed. Then, the engagement strength between the engagement portions 21 and the engagement target portions 33 (engagement strength when an external force is applied in the axial direction) is set to a value such that when the gas (Ga) blown out thorough the enclosure hole 32 applies pressure to the outer chassis 20, the outer chassis 20 begins to move toward the second side under the pressure.

With this configuration, when the pressure by the gas (Ga) passing through the enclosure hole 32 is applied to the outer chassis 20, the outer chassis 20 can move relative to the enclosure 30 to enlarge a gap 13 between the enclosure 30 and the outer chassis 20 (see Fig. 5B). Thus, the pressure inside the enclosure 30 can be quickly reduced because the gas (Ga) inside the enclosure 30 can be easily discharged to the outside.

Further, in the present embodiment, in the state before the outer chassis 20 moves relative to the enclosure 30 under the pressure by the gas (Ga), the chassis hole 22 of the outer chassis 20 is closed by the closure member (electrical connector 110 is used as an example in the present embodiment) inserted into the chassis hole 22 (Fig. 5A). Thus, it is possible to prevent a foreign object outside the outer chassis 20 from passing through the chassis hole 22 and entering the outer chassis 20.

On the other hand, as illustrated in Fig. 5B, when the outer chassis 20 moves relative to the enclosure 30 under the pressure by the gas (Ga), the chassis hole 22 is in a state of being not closed (unclosed state) by the electrical connector 110, which is a closure member. When the chassis hole 22 is in the unclosed state in this manner, the gas (Ga) easily passes through the chassis hole 22 and is easily discharged to the outside of the outer chassis 20. Thus, the pressure inside the outer chassis 20 can be quickly reduced. Further, the gas (Ga) passing through the chassis hole 22 can also be prevented from blowing out toward the user's face.

Further, with the above configuration, the outer chassis 20 can also be prevented from moving relative to the enclosure 30 more than necessary. Specifically, with the above configuration, when the pressure of the gas (Ga) inside the battery partition 80 becomes equal to or more than a predetermined value, in a case where the outer chassis 20 moves to the second side relative to the enclosure 30 under the pressure by the gas (Ga) and the gas (Ga) is discharged to the outside through the chassis hole 22, it is possible to stop the relative movement of the outer chassis 20 with respect to the enclosure 30. Thus, the outer chassis 20 can be prevented from moving relative to the enclosure 30 more than necessary.

Heretofore, the embodiment of the present invention has been described in detail, but the present invention is not limited to such a specific embodiment, and various variations and modifications are possible within the scope of the gist of the present invention as recited in the claims.

For example, in the embodiment described above, the suction device 10 can be configured not to include the battery partition 80.

For example, in the above embodiment, the suction device 10 may include a fixing mechanism (i.e., a post-movement chassis fixing mechanism) that fixes the outer chassis 20 to the enclosure 30 when the outer chassis 20 has relatively moved (for example, has relatively moved as illustrated in Fig. 5B) to the second side a predetermined distance with respect to the enclosure 30. With this configuration, the position of the outer chassis 20 relative to the enclosure 30 can be fixed after the relative movement of the outer chassis 20. Thus, for example, the user who sees the outer chassis 20 that has moved relative to the enclosure 30 as described above can easily detect that the battery 70 has failed. In short, the user can easily confirm that the battery 70 has failed.

For example, in the embodiment described above, the suction device 10 may include a detection sensor to detect that the outer chassis 20 has moved to the second side relative to the enclosure 30. For example, a position sensor or the like can be used as the detection sensor. The detection sensor is electrically connected to the control device 60 and transmits the detection result to the control device 60. Further, in this case, the suction device 10 may include an alarming mechanism to notify the user of an alarm (e.g., sound, light, text information, or the like) when the relative movement of the outer chassis 20 to the second side is detected by the detection sensor. This alarming mechanism, when controlled by the control device 60, signals an alarm. With this configuration, the user can quickly know that the battery 70 has failed.

Further, with the above configuration, the control device 60 of the suction device 10, when the relative movement of the outer chassis 20 to the second side is detected by the above detection sensor, may prohibit heating operation of the heating device 50. With this configuration, it is possible to prevent the heating operation of the heating device 50 in a state where the battery 70 has failed.

### REFERENCE SIGNS LIST

- 10: suction device
- 12: axis
- 15: mouthpiece
- 20: outer chassis
- 22: chassis hole
- 23: bottom wall
- 30: enclosure
- 32: enclosure hole
- 41: receiving hole
- 70: battery
- 80: battery partition
- 81b: second partition (specific partition)
- 82: partition hole
- 100: aerosol-generating base
- 110: electrical connector (closure member)
- Ga: gas

## Claims

1. A suction device for sucking an aerosol comprising:
an enclosure; and
a battery configured to be housed inside the enclosure and supply power used when an aerosol-generating base generates the aerosol,
wherein
at a first-side end of the enclosure in an axial direction of the suction device, a receiving hole through which the aerosol-generating base is received is provided or a mouthpiece is connected, and
at a second-side end of the enclosure opposite to the first side in the axial direction, an enclosure hole communicating inside of the enclosure with outside is provided.

2. The suction device according to claim 1, further comprising:
a battery partition configured to be disposed inside the enclosure,
wherein
the battery is housed in an inner area of the battery partition inside the enclosure,
the battery partition includes at least a specific partition that is a partition disposed on the second side with respect to the battery, and
a partition hole communicating inside of the battery partition with outside is provided in the specific partition.

3. The suction device according to claim 2, further comprising:
an outer chassis disposed outside the enclosure to cover the enclosure,
wherein
the outer chassis includes an opening at the first-side end in the axial direction.

4. The suction device according to claim 3, wherein the outer chassis has a bottomed cylindrical shape with the second-side end in the axial direction closed.

5. The suction device according to claim 4, wherein the outer chassis is configured to, when gas inside the battery partition passes through the partition hole and the enclosure hole and applies pressure to the outer chassis, move relative to the enclosure under the pressure.

6. The suction device according to claim 5, wherein the outer chassis, when moving relative to the enclosure under the pressure, moves to the second side in the axial direction relative to the enclosure.

7. The suction device according to claim 6, wherein
a bottom wall of the outer chassis on the second side in the axial direction includes a chassis hole that communicates inside of the outer chassis with outside,
in a state before the outer chassis moves relative to the enclosure under the pressure, a closure member is inserted into the chassis hole, and the chassis hole is closed by the inserted closure member, and
when the outer chassis moves relative to the enclosure under the pressure, the chassis hole is in a state of being not closed by the closure member.

8. The suction device according to claim 7, wherein the closure member includes an electrical connector.
